# EUROPEAN PATENT SPECIFICATION

(11) **EP 3 769 845 B1**
(45) Date of publication and mention of the grant of the patent: **28.02.2024**
(21) Application number: 20184789.4
(22) Date of filing: 08.07.2020
(51) Int. Cl.: B04B 1/08, B04B 7/14, B04B 5/10

(54) **A CENTRIFUGAL SEPARATOR**
ZENTRIFUGALABSCHEIDER
SÉPARATEUR CENTRIFUGE

(30) Priority: 26.07.2019 EP 19188546
(43) Date of publication of application: 27.01.2021
(73) Proprietor: Tetra Laval Holdings & Finance S.A., 1009 Pully (CH)
(72) Inventor: Ölund, Åke, 224 67 Lund (SE)
(74) Representative: Tetra Pak - Patent Attorneys SE

(56) References cited:
- EP-A1- 3 501 659
- WO-A1-2018/077921

## Description

### Technical Field

The invention relates to a centrifugal separator for separating a dairy product into at least a liquid light phase and a heavy phase, and to a method of separating a dairy product.

### Background

Separators for separating liquid mixtures into different phases of varying density under the influence of a centrifugal force are called centrifugal separators. These are widely used within the dairy industry, e.g. in the separation of hot and cold milk into skimmed milk and cream, in the separation of microorganisms from milk (bactofugation) and in the separation of whey.

The dairy product is introduced in a rotating disc stack of the centrifugal separator. Under the influence of the centrifugal force, heavier components begin to settle radially outwards whereas components of lower density settle radially inwards. towards the separator's axis of rotation in the interspaces between the discs of the disc stack. Thus, the phase of lower density (liquid light phase) is guided to an axial outlet and the heavier phase is forced radially outwards to the space outside the disc stack and from there to a heavy phase outlet.

Separtion discs and discs stacks in which the distance elements between the discs are formed as spot-formed spacing members are e.g. known from WO2018/077921. Further prior art is described in EP3501659A1.

A limiting factor for the capacity of a separator is the total surface of the discs that can be fitted into the separation bowl, and this is in turn limited by the required distance or space between the discs. Having a large amount of spot-formed spacing members on a separation disc allows for smaller distances between separation discs and thus for increasing the total number of discs in the disc stack.

However, there is still a need in the art for improved solutions and a higher separtion capacity when separating dairy products.

### Summary

It is an object of the invention to at least partly overcome one or more limitations of the prior art. In particular, it is an object to provide an improved centrifugal separator for separating a dairy product allowing for a reduced risk of clogging in a centrifugal separator comprising separation discs having spot-formed spacing members.

In a first aspect of the invention, this is achieved by a centrifugal separator according to claim 1.

The centrifugal separator may comprise at least one, such as at least two, separate sets of the first set of discs. Further, the centrifugal separator may comprise at least one, such as at least two, separate sets of the second set of discs.

In a second aspect of the invention, this is achieved by a separation system for separating a dairy product, the separation system comprising
- a centrifugal separator according to the first aspect above; and
- a clarifying centrifugal separator for separating solids out of the dairy product;
wherein the clarifying centrifugal separator is arranged upstream of the centrifugal separator such that a centrifugal separator outlet for a separated liquid light phase of the clarifying centrifugal separator is connected to the feed inlet of the centrifugal separator, and further wherein the clarifying centrifugal separator is arranged for discharging a liquid light phase comprising particles having a maximum size of 0.2 mm from the centrifugal separator outlet for a separated liquid light phase.

In another aspect of the invention, this is achieved by a method of separating a dairy product using a centrifugal separator according to the first or second aspects above, comprising
providing a flow of the dairy product through the first set of discs in the disc stack arranged in the centrifugal separator, and
providing the flow of the dairy product through the second set of discs.

Having first and second set of discs, in which the discs of the first set are separated from each other by spot-formed spacing members and with a distance that is less than 0.3 mm, and the discs in the second set are separated from each other with a distance that is larger than 0.3 mm, allows for an efficient separation in the first set and combined with a lowered risk of clogging in the centrifugal separator. This is because any particles that risk being stuck in between the discs of the first set may escape in the larger space formed between the discs of the second set. Particles can be introduced in a centrifugal separator by the liquid mixture that is to be separated or during CIP (cleaning-in-place) of flushing of the separator. Particles may also arise in the separator itself due to cavitation or agglomeration processes.

Still other objectives, features, aspects and advantages of the invention will appear from the following detailed description as well as from the drawings.

### Drawings

Embodiments of the invention will now be described, by way of example, with reference to the accompanying schematic drawings.
Figs. 1a-c are cross-sectional side views of centrifugal separators for separating a dairy product;
Fig. 2 is an exploded perspective view of a disc stack having first and second sets of discs;
Fig. 3a is a perspective view of a frustoconical separation disc of the first set of discs.
Fig. 3b is a perspective view of a frustoconical separation disc of the second set of discs.
Fig. 4 is a further detailed perspective view of first and second sets of discs in the disc stack;
Figs. 5a-d show different embodiments of disc stacks comprising the first and second sets of discs;
Fig. 6 is a schematic illustration of a separtion system for separating a dairy product, and
Fig. 7 is a flowchart of a method of separating a dairy product.

### Detailed Description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

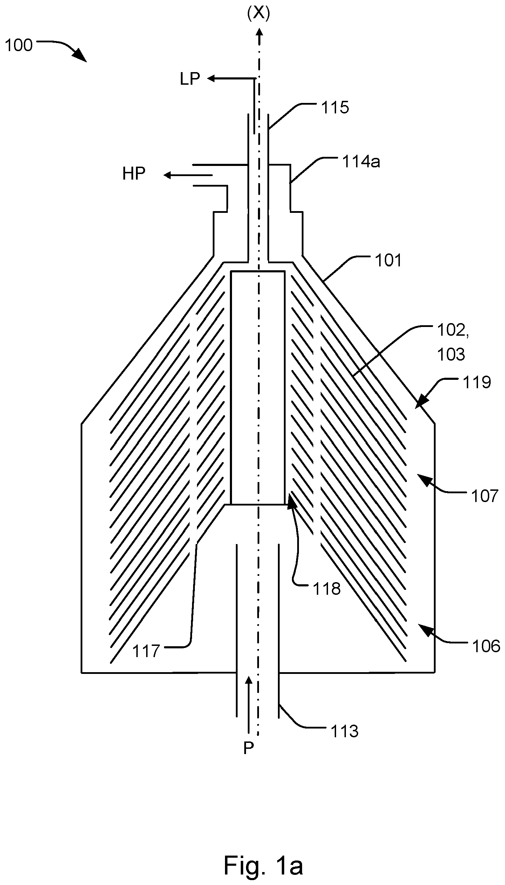

Fig. 1a is a schematic illustration of a separator 100 for separating a dairy product P into a liquid light phase LP and a liquid heavy phase HP. The dairy product may for example be milk or whey. Thus, the separator 100 could be for separating milk into a cream phase (liquid light phase) and a skim milk phase (liquid heavy phase). The separator 100 comprises a centrifuge bowl 101 and a disc stack 102 of frustoconical discs 103 arranged inside the centrifuge bowl 101. The stack 102 is arranged to rotate around vertical axis of rotation X. The dairy product to be separated (the feed) enters the centrifuge bowl 101 via an inlet 113, and is subsequently separated into the liquid light phase LP and a liquid heavy phase HP at the top of the centrifuge bowl 101. Thus, the separator 100 is arranged so that dairy product to be separated P flows from the inlet 113 into distribution openings 117 in the disc stack 102, and the liquid light phase LP is centrifuged towards a center portion 118 of the disk stack 102 and flows from the center portion 118 to a liquid light phase outlet 114a, whereas the liquid heavy phase HP is centrifuged towards a periphery 119 of the disc stack 102 and flows from the periphery 119 to an outlet 115 for the liquid heavy phase HP. The liquid light phase outlet 115 and the liquid heavy phase outlet 114a are arranged for continuously discharge of the separated phases.

The disc stack 102 comprises a first set of discs 106 and a second set of discs 107. The discs 103 in the first set of discs 106 are separated from each other by spot-formed spacing members 120 and with a distance that is smaller than 0.3 mm, and the discs 103 in the second set of discs 107 are separated from each other with a distance that is larger than 0.3 mm.

The separator 100 illustrated in Fig. 1a has a single separator outlet 114a for a separated heavy phase HP. This second centrifugal separator outlet 114a is arranged for continuous discharge of a separated liquid heavy phase HP and is further arranged in the top of the separator 100.

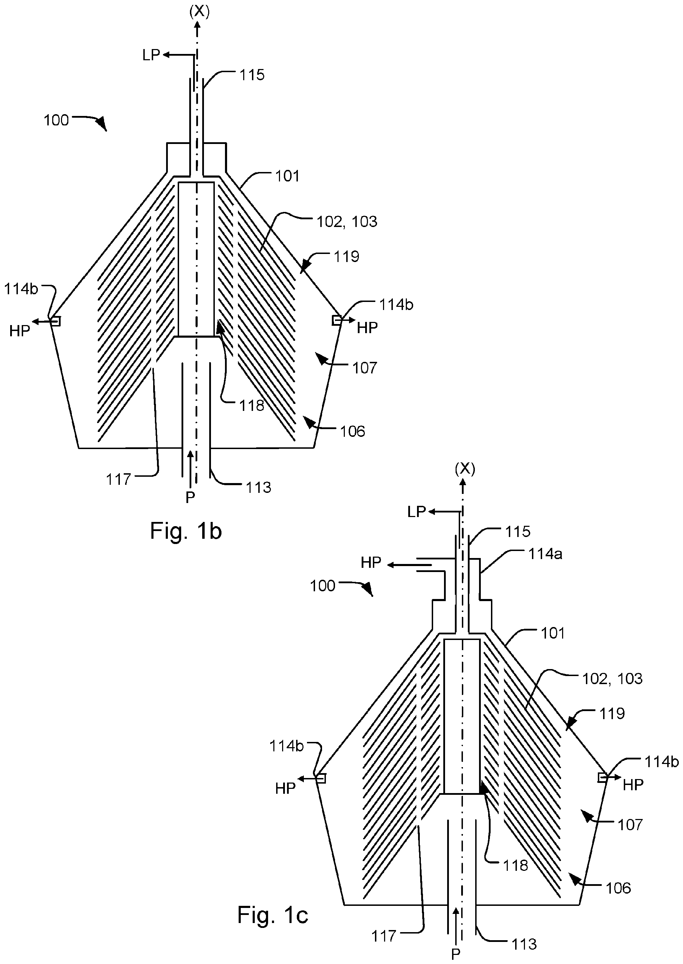

As illustrated in Fig. 1b, the second centrifugal separator outlet 114b could as an alternative be arranged at the periphery of the centrifuge bowl 101. Such outlet 114b could be in the form of a plurality of peripheral ports arranged to be opened intermittently, during a short period of time in the order of milliseconds, to enable discharge of a separated heavy phase in the form of a sludge phase. As an alternative, the peripheral ports may be in the form of a plurality of nozzles that are constantly open during operation to allow a constant discharge of a sludge phase. The outlet 114 b could thus for a sludge outlet.

As a further alternative, the separator 100 could comprise a first centrifugal separator outlet 115 for discharging a separated liquid light phase LP, a second centrifugal separator outlet 114a for discharge of a separated liquid heavy phase HP and a further centrifugal separator outlet 114b for discharge of a separated sludge phase. Such an example is illustrated in Fig. 1c. The outlet 115 for discharging a separated liquid light phase and the second separator outlet 114a for discharging a separated liquid heavy phase are arranged at the top of the separator 100 and arranged for continuous discharge of the separated liquid phases, whereas the further separator outlet 114b for discharging a separated sludge phase is arranged at the periphery of the centrifuge bowl 101, as discussed above.

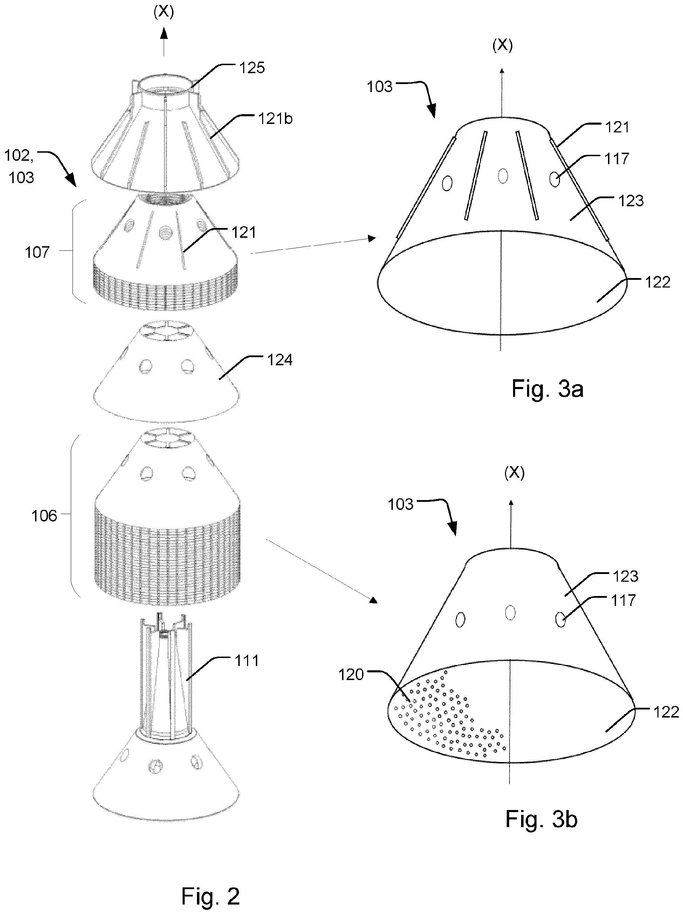

Fig. 2 shows an example of the disc stack 102 in an exploded perspective view. The disc stack 102 comprises a first set of discs 106 and a second set of discs 107. The discs 103 in the disk stack 102 comprises in this example the aforementioned distribution openings 117 such that the dairy product P passes the first set of discs 106 before passing the second set of discs 107.

The discs 103 in the first and second sets of discs 106 may have open center portions receiving a centering element 111 arranged in the centrifuge bowl 101. The separation discs 103 of the first and second sets may thus be accurately aligned with the axis of rotation X of the centrifuge bowl 101.

As illustrated in Fig. 2, the first and second sets are separated by an intermediate disc 124, i.e. the intermediate disc is arranged between the first 106 and the second 107 set of discs. The intermediate disc 124 may have a thickness that is larger than the thickness of the discs of the first 106 and second 107 sets. The intermediate disc 124 is in this example arranged axially on top of the first set 106 of discs. Thereby, the intermediate disc may equalize the pressure that is exerted onto the first set 106 of discs. Since the distance between the discs in the first set 106 is very small, i.e. less than 0.3 mm, it is important that the interspaces formed between the separation discs are equidistant. This is facilitating that the separation performance is substantially the same over the separation area formed by the first set 106 of discs. Thus, a thick intermediate disc 124 arranged on top of the first set of discs 106 may reduce the risk of uneven compression of the first set 106 of discs.

Furthermore, the intermediate disc 124 may have a radius that is larger than the radius of the discs of both the first and second sets.

Shown in Fig. 2 is also a top disc 125, as commonly used in centrifugal separators. The top disc 125 is in the present disclosure not regarded as a separation disc part of the disc stack 102. The disc stack 102 may be supported by the top disc 124 and the top disc may have a larger radius and/or a larger thickness than the separation discs. The top disc may have a radially inner portion that extend axially upwards, and a conical portion extending in substantially the same angle as the separation discs. The liquid heavy phase separated from the dairy product may be guided to flow over the radially outer edge of the top disc towards the heavy phase outlet 114, whereas the separated liquid light phase is guided under the top disc 124 towards the liquid light phase outlet 115.

In the embodiment shown in Fig. 2, the number of discs 103 in the first set discs 106 is higher than the number of discs 103 in the second set 107. Thus, the total number of discs in all firs sets may be higher than the total number of discs in all second sets. There is only one set of each set of discs shown in Fig. 2, but the disc stack 102 may comprise more than one of the first set of discs and more than one of the second set 107 of discs. As an example, the centrifugal separator 100 may comprise at least two separate sets of the second set of discs 107. The two separate sets of discs of the second set 107 could be separated by the first set of discs 106.

Further, there may be less than 50, such as less than 30, such as less than 15, discs 103 in each second set of discs 107.

Furthermore, as an example, at most 15%, such as at most 10%, such as at most 7% of the total number of discs may be discs of the second set 107.

As a further example, at least 3 % such as at least 5 % of the total number of discs may be may be discs of the second set 107. Thus, between 3-15 %, such as 3-10 %, such as 5-15 %, such as 5-10 %, of the total number of discs may be discs of the second set 107.

The discs 103 of the first 106 and/or the second 107 sets could be metal discs, such as discs of stainless steel.

Fig. 3a shows a perspective view of a frustoconical disc 103 of the second set 107 of discs. The disc 103 has an outer surface 123 and an inner surface 122. The discs 103 of the second set of discs 107 are separated by elongated spacing members 121 extending in a radial direction. In this example, the elongated spacing members, or strips, are arranged on the outer surface 123, but they could also be arranged on the inner surface 122. The disc 103 may for example comprise 4-20 elongated spacing members. The elongated spacing members 121 could be welded onto the surface of the disc 103. Such radial strips, or elongated and radially extending spacing members, may have a length that is above 20 mm, such as above 50 mm, and e.g. a width that is above 4 mm. The elongated spacing members may be straight or curved. The thickness of a separation disc in the second set 107 may for example be above 0.5 mm, such as between 0.50 -1.0 mm.

Fig. 3b shows a perspective view of a frustoconical disc 103 of the first set of discs. In this example, the plurality of spot formed spacing members 120 are solely formed on the inner surface 122 of the disc 103, but they could also be arranged on the outer surface 123 of the disc, such as solely on the outer surface 123. Only a few spot-formed spacing members 120 are shown on the inner surface 122 for clarity reasons, but it is to be understood that the spot-formed spacing members may be distributed over the whole inner 122 or outer 123 surface of the disc 103. The surface of the disc comprising spot-formed spacing members may further comprise elongated guiding structures, such as straight or curved elongated guiding members, for guiding the flow between the discs. Such guiding members may have a height that is smaller than the height of the spot-formed spacing members, i.e. they may be arranged so as not to bear any load in the disc stack during operation.

The spot-formed spacing members 120 may be integrally formed in a surface 122, 123 of the discs 103 in the first set of discs 106. The spot-formed spacing members 120 could thus be of the same material as the rest of the disc and may be formed when forming the frustoconical shape of the disc. Thus, the spot-formed spacing members 120 could be pressed as indentations of the disc material. Further, the spot-formed spacing members 120 could extend between 0.20-0.30 mm from the surface of the disc 103. As an example, the method as disclosed in WO15091846 could be used for forming such integrally formed spacing members.

The height of the spot formed spacing members are such that the distance between the discs is less than 0.3 mm in the first set 106 of discs. As an example, the distance between the discs in the first set 106 of discs may be between 0.20-0.30 mm.

The spot-formed spacing members could extend to a width that is less than 5 mm on the surface 122, 123 of the disc 103, such as less to a width that is less than 2 mm, such as less than 1 mm, along the surface of the disc. Thus, a spot-formed spacing member could occupy an area that is less than 20 mm², such as less than 10 mm² such as less than 5 mm², such as less than 1 mm², on the surface of the separation disc 103. Due to the small size, the spacing members may be provided in greater number without blocking or significantly impeding the flow of fluid mixture between the discs in the first set of discs. The inner or outer surface of the separation disc may have a surface density of the spot-formed spacing members that is above 10 spacing members/dm², such as above 50 spacing members/dm², such as about or above 100 spacing members/dm².

Furthermore, the separation discs 103 of the first set 106 may have a thickness that is less than 0.50 mm, such as less than 0.40 mm, such as less than 0.30 mm. As an example, the separation discs 103 of the first set 106 may have a thickness that is between 0.20 and 0.40 mm, such as between 0.28-0.40 mm.

The spot-formed spacing members may further be tip-shaped, i.e. having a cross-section that decreases with the height from the surface of the separtion disc 103.

The discs 103 in the first set of discs 106 are separated from each other by a first distance 108, and the discs 103 in the second set of discs 107 are separated from each other by a second distance 109.

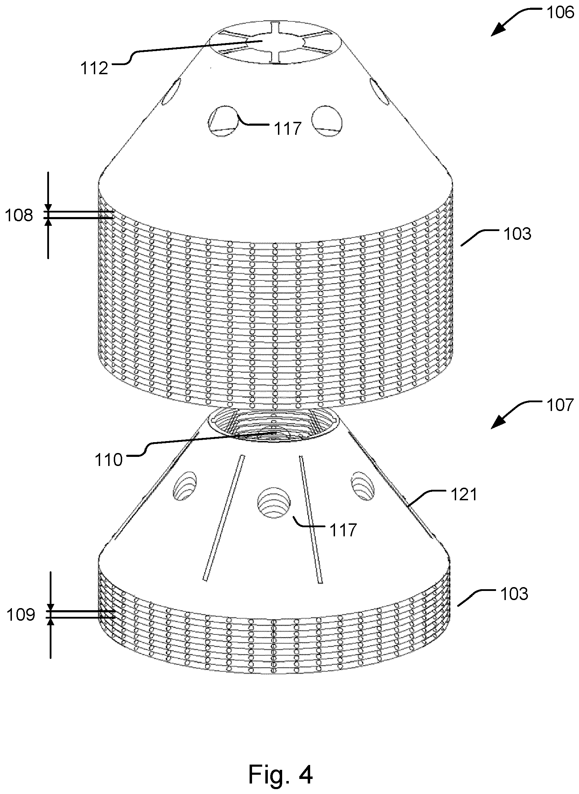

Fig. 4 is a further detailed perspective view of the first and second sets of discs 106, 107, having respective separation distances 108 and 109. The first distance 108 is smaller than the second distance 108, i.e. the spacing between the discs 103 in the first set of discs 106 is smaller than the spacing between the discs 103 in the second set of discs 107. The distance or spacing between the discs 103 in the first and second sets 106, 107, is sometimes also referred to as the caulk height. The caulk height in the first set of discs 106 is thus smaller than the caulk height in the second set of discs 107.

The distance 108 between the discs 103 in the first set 106 is smaller than 0.3 mm, such as between 0.1-0.3 mm, such as between 0.2-0.3 mm. The distance 109 between the discs 103 in the second set 107 is higher than the distance 108 between the discs in the first set 106, such as above 0.3 mm, such as 0.4 - 1.0 mm, such as between 0.5 -1.0 mm.

Having discs 103 in the first set 106 which are separated from each other by a distance which is smaller than the distance between the discs 103 in the second set 107 allows for an efficient separation of the dairy product in the first set of discs 106, and any particles that have a diameter that is larger than the distance 108 between the discs in the first set 106 may escape through the larger distances 109 between the discs in the second set 107. Thus, the two sets of discs 106, 107 decreases the risk for build-up of particles, such as fat globules, between the discs 103 . In the separation of e.g. milk, this provides for maintaining a high skimming efficiency for a given size of the separator 100. When the milk flows into the first set of discs 106, the fat globules may have decreased in amount and/or size. The risk of occlusion or plugging of fat in the disc stack 102 is thus reduced while a high efficiency can be provided. This is particularly advantageous in low temperature conditions where the milk is not heated, as the tendency for accumulation of the fat is increased in these cases. As the risk of fat occlusion is reduced, there is also a reduced need for cleaning the disc stack 102, i.e. less resources has to be spend on the maintenance of the separator 100, and the throughput in the production line can also be increased due to less interruptions from maintenance operations.

The number of discs 103 in the first set of discs 106 may be higher than the number of discs 103 in the second set of discs 107, as schematically illustrated in Fig. 3. This provides for achieving a high separation efficiency, as the number of discs 103 in the first set 106 can be increased more by having a smaller separation distance 108, compared to the discs 103 in the second set 107, for a given size of the separator 100. At the same time, the discs 103 of the second set 107 provides for the separation of larger particles as described above, although being fewer in number than the discs 103 of the first set 106. A compact separator 100 with increased low temperature efficiency may thus be provided.

A ratio between the number of discs 103 in the first set of discs 106 to the number of discs 103 in the second set of discs 106 may be in the range of 10-100.

The number of discs 103 in the first set of discs 106, having the decreased separation distance 108, may be in the range of 20 - 300 discs. Having a number of discs 103 of the first set 106 in this range provides for efficient separation of the dairy product.

As an example, the distance 108 between the discs in the first set 106 may be 0.2 - 0.3 mm and the distance 109 between the discs in the second set 107 may be between 0.4 - 1.0 mm, such as between 0. 5 - 0.8 mm.

The discs 103 in the first set of discs 106 may have a reduced diameter center portion 112 coaxially aligned with the open center portion 110 of the discs 103 in the second set of discs 107. The reduced diameter center portion 112 of the discs 103 in the second set 107 is shown in the example of Fig.4.

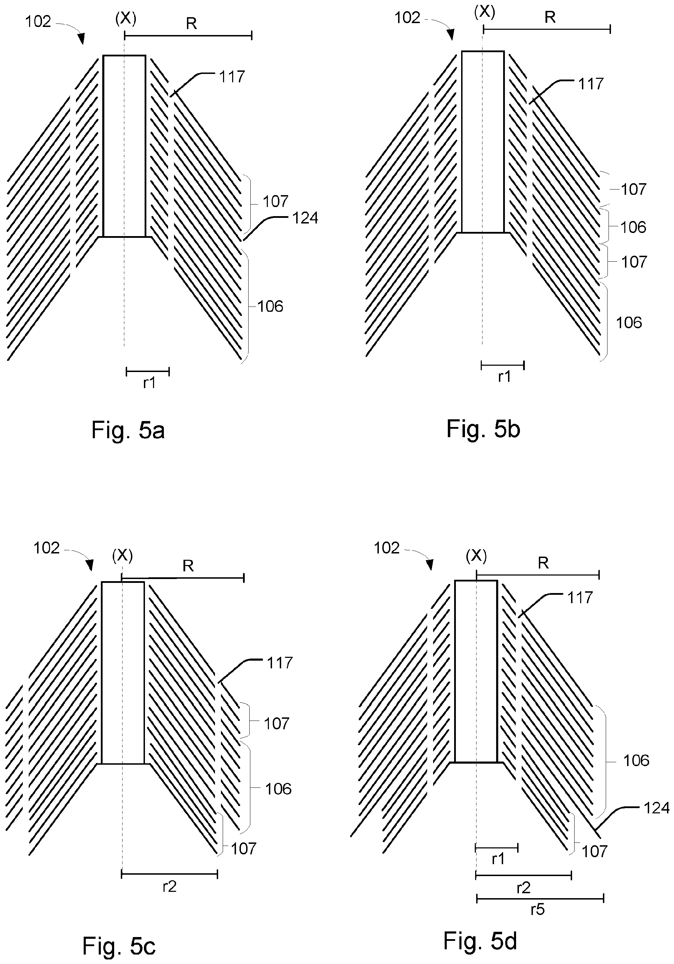

Figs. 5a - 5d show different examples of disc stacks 102 comprising at least a first set 106 and at least one second set 107 of separation discs.

As an example, a second set of discs may be arranged as the axially uppermost portion of the disc stack 102. "The uppermost portion" does not include the top disc but only refers to the separation discs. Thus, a disc stack 1002 in which a second set of disc is arranged as the uppermost portion may still have a top disc 125.

The disc stack 102 shown in Fig. 5a comprises a single set of the second set 107 of discs arranged axially above a single set of the first set 106 of discs 10. In between is an intermediate disc 124 with a higher thickness than the thickness of the individual discs in both the first 106 and second 107 sets of discs. The first 106 and second 107 sets of discs have a radius R, and the distribution openings 117 are arranged in the discs such that distribution channels are formed at a radius r1 on the inner portion of the disc stack, i.e. at a radius r1 < R/2. The second set of discs 107 arranged as the axially uppermost portion of the disc stack 102 in Fig. 5a may comprise 3-10 discs that are separated from each other with a distance that is between 0.8-2.0 mm. The disc stack shown in Fig. 5a may e.g. be used in a centrifugal separator for separating milk. Larger particles in the milk risk getting trapped in the distribution holes 117 due to the small distances between the discs 103 in the first set 106, but the addition of the second set 107 at the top allows such particles to escape.

In embodiments, a second set of discs 107 is further arranged around the axially central portion of the disc stack 102. Such a disc stack is shown in Fig. 5b, in which a second set 107 of discs is arranged as the uppermost portion of the disc stack and an additional second set 107 is added in the central portion of the disc stack. The first 106 and second 107 sets of discs have a radius R, and the distribution openings 117 are arranged in the discs such that distribution channels are formed at a radius r1 on the inner portion of the disc stack, i.e. at a radius r1 < R/2. As an example the second set of discs 107 arranged as the axially uppermost portion of the disc stack 102 may comprise 3-10 discs that are separated from each other with a distance that is between 0.8-2.0 mm and the set of discs 107 arranged around the axially central portion of the disc stack 102 may comprises 3-10 discs that are separated from each other with a distance that is between 0.8-2.0 mm. The disc stack shown in Fig. 5b may be used in a centrifugal separator for separating whey. Larger particles in the whey (chees fines) risk getting trapped in the distribution holes 117 due to the small distance between the discs in the first set 106, but the addition of sets 107 of discs separated by larger distances will allow such particles to escape.

In embodiments, a second set of discs 107 is arranged as the axially lowermost portion of the disc stack 102. An example of such a disc stack 102 is shown in Fig. 5c. In this disc stack, there is a second set 106 of discs arranged both in the axially uppermost portion and in the axially lowermost portion of the disc stack 102. A first set of discs 106 is thus arranged in between two second sets of discs. The disc stack may further comprise intermediate discs 124 (not shown in Fig. 5c) between the first and second sets. The first 106 and second 107 sets of discs have a radius R, and the distribution openings 117 are arranged in the discs such that distribution channels are formed at a radius r2 on the outer portion of the disc stack, i.e. at a radius r2 > R/2.

The second set of discs 107 that is arranged as the axially lowermost portion of the disc stack 102 may have a diameter that is smaller than the discs of the first set of discs 106. In this example, the discs in the lowermost portion have radius that is substantially equal to the radial position of the distribution openings 117, i. a radius of r2. In the disc stack shown in Fig. 5c, the second set of discs 107 that is arranged as the axially lowermost portion of the disc stack 102 may comprise 5-50 discs that are separated from each other with a distance that is between 0.5-1.2 mm.

Further, as an example, the second set of discs 107 arranged as the axially uppermost portion of the disc stack 102 may comprising 1-5 discs that are separated from each other with a distance that is between 0.5-2.0 mm. The disc stack shown in Fig. 5c may be used in a centrifugal separator for bactofugation, i.e. in a centrifugal separation of microorganisms from milk, such as in a 1-phase or 2-phase Bactofuge with or without recirculation of the bacteria concentrate. Larger particles in the milk risk getting trapped in the distribution holes if the distance between the discs is small, but the addition of discs separated by a larger distance in the bottom of the disc stack will allow for escape of the such particles. Further, if these discs in the bottom have a smaller diameter and are without distribution holes, particles of all sizes are allowed to escape. Adding a few discs separated by a larger distance in the top of the disc stack further reduces the risk for particles with a low density to get trapped in the distributing holes 117.

Fig. 5d shows an example of a disc stack having a single set of the second set 107 of discs arranged as the lowermost portion of the disc stack 102. The discs of this second set has a reduced radius r2 compared to the radius R of the discs in the first set 106. As an example, the disc stack may comprise an intermediate disc 124 arranged on top of the second set of discs 107 that is arranged as the axially lowermost portion of the disc stack 102. This intermediate disc 124 has a diameter that is larger than the diameter of the discs of the first set of discs 106. Thus, the radius r5 of the intermediate disc 124 is larger than the radius R of the discs of the first set 106. Furthermore, the distribution openings 117 are arranged in all the discs of the disc stack such that distribution channels are formed at a radius r1 on the inner portion of the disc stack, i.e. at a radius r1 < R/2.

The disc stack as shown in Fig. 5d may be used in a combined clarifier/ separator, i.e. in a centrifugal separator containing a lower clarifier section, and an upper separation section, in this case divided by a distributing disc with larger outer radius. The lower clarifier section may separate a lot of larger particles and thus contains a set of the second set 107 of discs 103, whereas the upper separation section handling a feed having a low number of particles contains a set of the first set 106 of separtion discs 103.

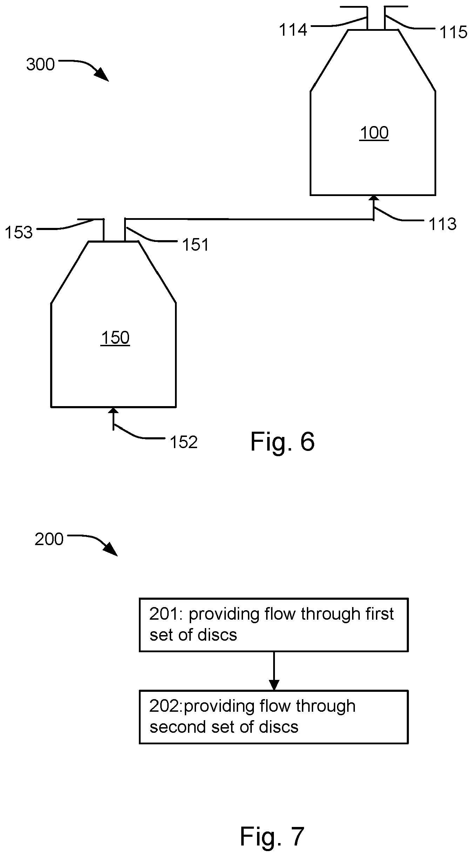

Fig. 6 is a schematic illustration of a separation system 300 for separating a dairy product. The separation system 300 comprises a centrifugal separator 100 as disclosed herein above and a clarifying centrifugal separator 150 for separating solids out of the dairy product. The clarifying centrifugal separator 150 is arranged upstream of the centrifugal separator. Thus, a centrifugal separator outlet 151 for a separated liquid light phase of the clarifying centrifugal separator 150 is connected to the feed inlet 113 of the centrifugal separator 100. The clarifying centrifugal separator 150 may further be arranged for discharging a liquid light phase comprising particles having a maximum size of 0.2 mm from the centrifugal separator outlet 151 for a separated liquid light phase.

A clarifying separator refers to a centrifugal separator, also known as a "clarifier" in the art of separation technology.

The use of a clarifying separator 150 upstream of the centrifugal separator may further reduce the amount of particles in the dairy product that is to be separated in the centrifugal separator 100. The dairy product may for example be selected from milk and whey.

The dairy product may thus first enter the feed inlet 152 of the clarifying separator 150. A separated heavier phase comprising particles may be continuously discharged vi a heavy phase outlet 153 of the clarifying separator 150, whereas the liquid light phase, comprising dairy product with a lower amount of solids, may be continuously discharged via a liquid light outlet 151 and transported to the feed inlet 113 of the centrifugal separator 100. The clarifying separator 150 may further comprise sludge outlets at the periphery of the centrifuge bowl in which the separtion takes place. Such sludge outlets may be arranged for intermittent discharge of a separated solids or sludge phase.

Fig. 7 illustrates a flow chart of a method 200 of separating a dairy product using a separator 100 or a separation system 300 as described above in relation to Figs. 1 - 6. The method 200 comprises providing 201 a flow of the dairy product through a first set of discs 106 in a disc stack 102 arranged in the separator 100, and providing 202 a flow of the dairy product through a second set of discs 107 arranged in the centrifugal separator 100. The discs 103 in the first set of discs 106 are separated from each other by a distance 108 that is less than 0.3 mm, and the discs 103 in the second set of discs 107 are separated from each other by a second distance 109 that is above 0.3 mm. The method 200 thus allows for an efficient separation of a dairy product with a reduced risk of blockage in the disc stack 102 by the particles in the product, as described above in relation to the separator 100 and Figs. 1-6.

The dairy product may be milk or whey, such as cold milk. The cold milk may be milk which is not heated. The temperature of the cold milk may be below 30°C or below 20°C in some examples. The temperature of the cold milk may also be below 17°C or below 14°C in some examples. The temperature of the cold milk may also be below 13°C or below 10°C in some examples. The tendency of the fat to form larger aggregates of fat particles may increase with the lowering of the temperature. Thus, the separator 100 provides for a particularly advantageous increase in skimming efficiency and reduced risk of such fat blockage of fat blockage as the temperature of the milk is reduced further across the ranges as exemplified above.

From the description above follows that, although various embodiments of the invention have been described and shown, the invention is not restricted thereto, but may also be embodied in other ways within the scope of the subject-matter defined in the following claims.

## Claims

1. A centrifugal separator (100) for separating a dairy product (P) into at least a liquid light phase (LP) and a heavy phase (HP), the centrifugal separator (100) comprising
a centrifuge bowl (101) arranged for rotating around an axis of rotation (X),
a feed inlet (113) for suppling the dairy product to be separated into the centrifuge bowl (101);
a first centrifugal separator outlet (115) for discharging a separated liquid light phase (LP);
a second centrifugal separator outlet (114a,b) for discharging a separated heavy phase (HP);
a disc stack (102) of frustoconical discs (103) arranged inside the centrifuge bowl (101), the disc stack (102) comprises
a first set of discs (106),
a second set of discs (107), wherein
the discs (103) in the disk stack (102) comprises distribution openings (117) such that the dairy product (P) passes the first set of discs (106) before passing the second set of discs (107),
**characterized in that**
the discs (103) in the first set of discs (106) are separated from each other by spot- formed spacing members (120) and with a distance (108) that is smaller than 0.3 mm, and
the discs (103) in the second set of discs (107) are
- separated from each other with a distance (109) that is 0.4 - 1.0 mm, or
- arranged as the axially uppermost portion of the disc stack (102) and comprise 3-10 discs that are separated from each other with a distance that is between 0.8-2.0 mm.

2. A centrifugal separator (100) according to claim 1, wherein the disc stack (102) further comprising an intermediate disc (124) arranged between a first (106) and a second (107) set of discs, wherein the intermediate disc (124) has a thickness that is larger than the thickness of the discs of the first (106) and second (107) sets.

3. A centrifugal separator (100) according to claim 2, wherein said intermediate disc (124) is arranged axially on top of a first set (106) of discs.

4. A centrifugal separator (100) according to any previous claim, wherein the spot-formed spacing members (120) are integrally formed in a surface (122, 123) of the discs (103) in the first set of discs (106).

5. A centrifugal separator (100) according to any previous claim, wherein the discs (103) of the second set of discs (107) are separated by elongated spacing members (121) extending in a radial direction.

6. A centrifugal separator (100) according to any previous claim, wherein the number of discs (103) in the first set of discs (106) is higher than the number of discs (103) in second set of discs (107).

7. A centrifugal separator (100) according to any previous claim, wherein there are less than 50 discs (103) in each second set of discs (107).

8. A centrifugal separator (100) according to any previous claim, wherein the centrifugal separator (100) comprises at least two separate sets of the second set of discs (107).

9. A centrifugal separator (100) according to any previous claim, wherein a second set of discs (107) is arranged as the axially uppermost portion of the disc stack (102).

10. A centrifugal separator (100) according to any previous claim, wherein a second set of discs (107) is further arranged around the axially central portion of the disc stack (102).

11. A centrifugal separator (100) according to claim 10, wherein the second set of discs (107) arranged as the axially uppermost portion of the disc stack (102) comprises 3-10 discs that are separated from each other with a distance that is between 0.8-2.0 mm and the set of discs (107) arranged around the axially central portion of the disc stack (102) comprises 3-10 discs that are separated from each other with a distance that is between 0.8-2.0 mm.

12. A centrifugal separator (100) according to any previous claim, wherein a second set of discs (107) is arranged as the axially lowermost portion of the disc stack (102).

13. A separation system (300) for separating a dairy product, the separation system (300) comprising
- a centrifugal separator (100) according to any previous claim; and
- a clarifying centrifugal separator (150) for separating solids out of the dairy product;
wherein the clarifying centrifugal separator (150) is arranged upstream of the centrifugal separator such that a centrifugal separator outlet (151) for a separated liquid light phase of the clarifying centrifugal separator (150) is connected to the feed inlet (113) of the centrifugal separator (100), and further wherein the clarifying centrifugal separator (150) is arranged for discharging a liquid light phase comprising particles having a maximum size of 0.2 mm from the centrifugal separator outlet (151) for a separated liquid light phase.

14. A method (200) of separating a dairy product using a centrifugal separator (100) according to any of claims 1 - 12 or a separation system (300) according to claim 13, comprising
providing (201) a flow of the dairy product through the first set of discs (106) in the disc stack (102) arranged in the centrifugal separator (100), and
providing (202) the flow of the dairy product through the second set of discs (107).

## Patentansprüche

1. Zentrifugalabscheider (100) zum Trennen eines Milchprodukts (P) in mindestens eine flüssige leichte Phase (LP) und eine schwere Phase (HP), wobei der Zentrifugalabscheider (100) umfasst:
ein Zentrifugengefäß (101), das zum Rotieren um eine Rotationsachse (X) angeordnet ist;
einen Beschickungseinlass (113) zum Zuführen des zu trennenden Milchprodukts in das Zentrifugengefäß (101);
einen ersten Zentrifugalabscheiderauslass (115) zum Austragen einer abgetrennten flüssigen leichten Phase (LP);
einen zweiten Zentrifugalabscheiderauslass (114a, b) zum Austragen einer abgetrennten schweren Phase (HP) ;
einen Scheibenstapel (102) aus kegelstumpfförmigen Scheiben (103), die innerhalb des Zentrifugengefä-βes (101) angeordnet sind, wobei der Scheibenstapel (102) umfasst:
einen ersten Satz von Scheiben (106),
einen zweiten Satz von Scheiben (107), wobei
die Scheiben (103) in dem Scheibenstapel (102) Verteilungsöffnungen (117) umfassen, so dass das Milchprodukt (P) den ersten Satz von Scheiben (106) passiert, bevor es den zweiten Satz von Scheiben (107) passiert,
**dadurch gekennzeichnet, dass**
die Scheiben (103) in dem ersten Satz von Scheiben (106) durch punktgebildete Abstandselemente (120) und in einer Distanz (108), die kleiner als 0,3 mm ist, voneinander getrennt sind, und
die Scheiben (103) in dem zweiten Satz von Scheiben (107)
- in einer Distanz (109), die 0,4 bis 1,0 mm ist, voneinander getrennt sind, oder
- als der axial oberste Anteil des Scheibenstapels (102) angeordnet sind und 3 bis 10 Scheiben umfassen, die in einer Distanz, die zwischen 0,8 und 2,0 mm liegt, voneinander getrennt sind.

2. Zentrifugalabscheider (100) nach Anspruch 1, wobei der Scheibenstapel (102) des Weiteren eine mittlere Scheibe (124) umfasst, die zwischen einem ersten (106) und einem zweiten (107) Satz von Scheiben angeordnet ist, wobei die mittlere Scheibe (124) eine Dicke hat, die größer als die Dicke der Scheiben des ersten (106) und des zweiten Satzes (107) ist.

3. Zentrifugalabscheider (100) nach Anspruch 2, wobei die mittlere Scheibe (124) axial auf einem ersten Satz (106) von Scheiben angeordnet ist.

4. Zentrifugalabscheider (100) nach einem der vorhergehenden Ansprüche, wobei die punktgebildeten Abstandselemente (120) integral in einer Oberfläche (122, 123) der Scheiben (103) in dem ersten Satz von Scheiben (106) gebildet sind.

5. Zentrifugalabscheider (100) nach einem der vorhergehenden Ansprüche, wobei die Scheiben (103) des zweiten Satzes von Scheiben (107) durch längliche Abstandselemente (121) getrennt sind, die sich in eine radiale Richtung erstrecken.

6. Zentrifugalabscheider (100) nach einem der vorhergehenden Ansprüche, wobei die Anzahl der Scheiben (103) in dem ersten Satz von Scheiben (106) höher als die Anzahl der Scheiben (103) in dem zweiten Satz der Scheiben (107) ist.

7. Zentrifugalabscheider (100) nach einem der vorhergehenden Ansprüche, wobei weniger als 50 Scheiben (103) in jedem zweiten Satz von Scheiben (107) vorhanden sind.

8. Zentrifugalabscheider (100) nach einem der vorhergehenden Ansprüche, wobei der Zentrifugalabscheider (100) mindestens zwei separate Sätze des zweiten Satzes von Scheiben (107) umfasst.

9. Zentrifugalabscheider (100) nach einem der vorhergehenden Ansprüche, wobei ein zweiter Satz von Scheiben (107) als der axial oberste Anteil des Scheibenstapels (102) angeordnet ist.

10. Zentrifugalabscheider (100) nach einem der vorhergehenden Ansprüche, wobei ein zweiter Satz von Scheiben (107) des Weiteren um den axial zentralen Anteil des Scheibenstapels (102) angeordnet ist.

11. Zentrifugalabscheider (100) nach Anspruch 10, wobei der zweite Satz von Scheiben (107), der als der axial oberste Anteil des Scheibenstapels (102) angeordnet ist, 3 bis 10 Scheiben umfasst, die in einer Distanz, die zwischen 0,8 und 2,0 mm liegt, voneinander getrennt sind, und der Satz der Scheiben (107), der um den axial zentralen Anteil des Scheibenstapels (102) angeordnet ist, 3 bis 10 Scheiben umfasst, die in einer Distanz, die zwischen 0,8 und 2,0 mm liegt, voneinander getrennt sind.

12. Zentrifugalabscheider (100) nach einem der vorhergehenden Ansprüche, wobei ein zweiter Satz von Scheiben (107) als der axial unterste Anteil des Scheibenstapels (102) angeordnet ist.

13. Trennsystem (300) zum Trennen eines Milchprodukts, wobei das Trennsystem (300) umfasst:
- einen Zentrifugalabscheider (100) nach einem der vorhergehenden Ansprüche; und
- einen klärenden Zentrifugalabscheider (150) zum Abtrennen von Feststoffen aus dem Milchprodukt;
wobei der klärende Zentrifugalabscheider (150) vorgeordnet zu dem Zentrifugalabscheider angeordnet ist, so dass ein Zentrifugalabscheiderauslass (151) für eine abgetrennte flüssige leichte Phase des klärenden Zentrifugalabscheiders (150) mit dem Beschickungseinlass (113) des Zentrifugalabscheiders (100) verbunden ist, und wobei des Weiteren der klärende Zentrifugalabscheider (150) angeordnet ist, um eine flüssige leichte Phase, die Partikel mit einer Maximalgröße von 0,2 mm umfasst, aus dem Zentrifugalabscheiderauslass (151) als abgetrennte flüssige leichte Phase auszutragen.

14. Verfahren (200) zum Trennen eines Milchprodukts unter Verwendung eines Zentrifugalabscheiders (100) nach einem der Ansprüche 1 bis 12 oder eines Trennsystems (300) nach Anspruch 13, umfassend:
Bereitstellen (201) eines Flusses des Milchprodukts durch einen ersten Satz von Scheiben (106) in dem Scheibenstapel (102), der in dem Zentrifugalabscheider (100) angeordnet ist, und
Bereitstellen (202) des Flusses des Milchprodukts durch den zweiten Satz der Scheiben (107).

## Revendications

1. Séparateur centrifuge (100) destiné à séparer un produit laitier (P) en au moins une phase légère liquide (LP) et une phase lourde (HP), le séparateur centrifuge (100) comprenant
un bol de centrifugation (101) agencé pour tourner autour d'un axe de rotation (X) ;
une entrée d'alimentation (113) pour introduire le produit laitier devant être séparé à l'intérieur du bol de centrifugation (101) ;
une première sortie de séparateur centrifuge (115) pour évacuer une phase légère liquide séparée (LP) ;
une deuxième sortie de séparateur centrifuge (114a,b) pour évacuer une phase lourde séparée (HP) ;
un empilement de disques (102) de disques tronconiques (103) disposé à l'intérieur du bol de centrifugation (101), l'empilement de disques (102) comprenant
un premier ensemble de disques (106),
un deuxième ensemble de disques (107), dans lequel
les disques (103) dans l'empilement de disques (102) comprennent des ouvertures de distribution (117) de telle sorte que le produit laitier (P) passe par le premier ensemble de disques (106) avant de passer par le deuxième ensemble de disques (107),
**caractérisé en ce que**
les disques (103) dans le premier ensemble de disques (106) sont séparés les uns des autres par des éléments d'espacement en forme de bouton (120) et avec une distance (108) qui est inférieure à 0,3 mm, et
les disques (103) dans le deuxième ensemble de disques (107) sont
- séparés les uns des autres avec une distance (109) qui fait 0,4-1,0 mm, ou
- agencés comme la partie axialement la plus haute de l'empilement de disques (102) et comprennent 3-10 disques qui sont séparés les uns des autres avec une distance qui fait entre 0,8 et 2,0 mm.

2. Séparateur centrifuge (100) selon la revendication 1, dans lequel l'empilement de disques (102) comprend en outre un disque intermédiaire (124) disposé entre un premier (106) et un deuxième (107) ensemble de disques, dans lequel le disque intermédiaire (124) a une épaisseur qui est plus grande que l'épaisseur des disques des premier (106) et deuxième (107) ensembles.

3. Séparateur centrifuge (100) selon la revendication 2, dans lequel ledit disque intermédiaire (124) est disposé axialement au-dessus d'un premier ensemble (106) de disques.

4. Séparateur centrifuge (100) selon une quelconque revendication précédente, dans lequel les éléments d'espacement en forme de bouton (120) sont formés d'un seul tenant dans une surface (122, 123) des disques (103) dans le premier ensemble de disques (106).

5. Séparateur centrifuge (100) selon une quelconque revendication précédente, dans lequel les disques (103) du deuxième ensemble de disques (107) sont séparés par des éléments d'espacement allongés (121) s'étendant dans une direction radiale.

6. Séparateur centrifuge (100) selon une quelconque revendication précédente, dans lequel le nombre de disques (103) dans le premier ensemble de disques (106) est supérieur au nombre de disques (103) dans le deuxième ensemble de disques (107).

7. Séparateur centrifuge (100) selon une quelconque revendication précédente, dans lequel il y a moins de 50 disques (103) dans chaque deuxième ensemble de disques (107) .

8. Séparateur centrifuge (100) selon une quelconque revendication précédente, le séparateur centrifuge (100) comprenant au moins deux ensembles séparés du deuxième ensemble de disques (107).

9. Séparateur centrifuge (100) selon une quelconque revendication précédente, dans lequel un deuxième ensemble de disques (107) est agencé comme la partie axialement la plus haute de l'empilement de disques (102).

10. Séparateur centrifuge (100) selon une quelconque revendication précédente, dans lequel un deuxième ensemble de disques (107) est en outre disposé autour de la partie axialement centrale de l'empilement de disques (102).

11. Séparateur centrifuge (100) selon la revendication 10, dans lequel le deuxième ensemble de disques (107) agencé comme la partie axialement la plus haute de l'empilement de disques (102) comprend 3-10 disques qui sont séparés les uns des autres avec une distance qui fait entre 0,8 et 2,0 mm et l'ensemble de disques (107) disposé autour de la partie axialement centrale de l'empilement de disques (102) comprend 3-10 disques qui sont séparés les uns des autres avec une distance qui fait entre 0,8 et 2,0 mm.

12. Séparateur centrifuge (100) selon une quelconque revendication précédente, dans lequel un deuxième ensemble de disques (107) est agencé comme la partie axialement la plus basse de l'empilement de disques (102).

13. Système de séparation (300) destiné à séparer un produit laitier, le système de séparation (300) comprenant
- un séparateur centrifuge (100) selon une quelconque revendication précédente ; et
- un séparateur centrifuge de clarification (150) pour séparer les matières solides du produit laitier ;
dans lequel le séparateur centrifuge de clarification (150) est disposé en amont du séparateur centrifuge de telle sorte qu'une sortie de séparateur centrifuge (151) pour une phase légère liquide séparée du séparateur centrifuge de clarification (150) est raccordée à l'entrée d'alimentation (113) du séparateur centrifuge (100), et dans lequel, en outre, le séparateur centrifuge de clarification (150) est agencé pour évacuer une phase légère liquide comprenant des particules ayant une taille maximale de 0,2 mm de la sortie de séparateur centrifuge (151) pour une phase légère liquide séparée.

14. Procédé (200) de séparation d'un produit laitier au moyen d'un séparateur centrifuge (100) selon l'une quelconque des revendications 1 à 12 ou d'un système de séparation (300) selon la revendication 13, comprenant
l'acheminement (201) d'un écoulement du produit laitier à travers le premier ensemble de disques (106) dans l'empilement de disques (102) disposé dans le séparateur centrifuge (100), et
l'acheminement (202) de l'écoulement du produit laitier à travers le deuxième ensemble de disques (107).
